# EUROPÄISCHE PATENTSCHRIFT

(11) **EP 1 772 647 B1**
(45) Veröffentlichungstag und Bekanntmachung des Hinweises auf die Patenterteilung: **30.07.2008**
(21) Anmeldenummer: 06020807.1
(22) Anmeldetag: 04.10.2006
(51) Int. Cl.: F16F 1/38

(54) **Verfahren zur Herstellung eines Festlagers und einteiliges Festlager**
Process for the manufacture of a fixed bearing and on-piece bearing
Procédé de fabrication d'un palier fixe et palier en une seule pièce

(30) Priorität: 06.10.2005 DE 102005047896
(43) Veröffentlichungstag der Anmeldung: 11.04.2007
(73) Patentinhaber: WOCO AVS GmbH, 63628 Bad Soden-Salmünster (DE)
(72) Erfinder: Heckmann, Gerhard, 36381 Schlüchtern/Vollmerz (DE); Möller, Ralf, 36381 Schlüchtern/Niederzell (DE); Kolb, Ralf, 36381 Schlüchtern/Herolz (DE)
(74) Vertreter: Weber-Bruls, Dorothée

(56) Entgegenhaltungen:
- EP-A2- 1 098 105
- DE-A1- 10 211 955
- GB-A- 657 712
- US-A- 4 477 302

## Beschreibung

Die vorliegende Erfindung betrifft ein Verfahren zur Herstellung eines Festlagers zur Aufhängung zumindest eines dynamisch beanspruchbaren Funktionsteiles an einem abstützenden Bauteil, wobei das Festlager einen Rahmen, eine Federanordnung und eine Hülse umfaßt, die Federanordnung den Rahmen mit der Hülse verbindet, der Rahmen die Hülse und die Federanordnung in einer Arbeitsebene des Festlagers umschließt, die Arbeitsebene eine erste Hauptrichtung, in der das Funktionsteil im Betrieb des Festlagers dynamisch beansprucht wird, und eine zu der ersten Hauptrichtung senkrechte zweite Hauptrichtung, in der eine statische Nulllage des Funktionsteils im Betrieb des Festlagers variabel ist, umfaßt, der Rahmen am Bauteil befestigt wird, und das Funktionsteil an die Hülse angebracht wird.

Ein gattungsgemäßes Verfahren ist aus der DE 102 11 955 B4 bekannt. Das mit diesem bekannten Verfahren hergestellte Festlager ist jedoch nicht einteilig. Insbesondere umfaßt es einen zweiteiligen Rahmen, wobei die beiden Rahmenteile unter Einsatz von Gelenkbolzen miteinander verbunden sind. Diese gelenkige Verbindung soll gewährleisten, daß es zu keinen Spannungsspitzen kommt, wenn die Federanordnung in der Arbeitsebene des Festlagers verformt wird, um an der Aufnahme von Relativverschiebungen der Hülse in der zweiten Hauptrichtung im Betrieb des Festlagers mitzuwirken. Zudem soll bei dem bekannten Festlager die Federanordnung bei einer statischen Belastung in der zweiten Hauptrichtung auf Druck und Schub Verformungskräfte auf den Rahmen ausüben, weshalb auch eines der beiden Rahmenteile elastisch sein muß. Insbesondere die Montage des bekannten Festlagers aufgrund der Notwendigkeit der gelenkigen Verbindung zwischen den beiden Rahmenteilen führt zu großen Herstellungskosten und kann eine Quelle für mögliche Fehlmontagen sein. Zusätzlich führt die zweiteilige Ausgestaltung des Rahmens mit der weiteren Forderung, daß ein Rahmenteil starr und das andere Rahmenteil elastisch ist, zu einer weiteren Komplexität des Herstellungsverfahrens des bekannten Festlagers. Um eine sichere Verbindung zwischen den beiden Rahmenteilen zu erhalten, muß außerdem bei der Montage die Federanordnung ausreichend stark komprimiert werden, so daß die dadurch erzeugte innere Spannung im Festlager zwar einem Lösen der Verbindung entgegenwirkt, jedoch hinderlich bei einer Einstellung der Spannungsverteilung im Festlager zur Optimierung der Aufnahme von Kräften im Betrieb des Festlagers ist.

Es ist daher die Aufgabe der vorliegenden Erfindung, das gattungsgemäße Verfahren derart weiterzuentwickeln, daß es kostengünstiger und funktionstüchtiger wird.

Diese Aufgabe wird erfindungsgemäß durch folgende Schritte gelöst: Bereitstellen des Rahmens und der Hülse jeweils aus einem formsteifen Teil, Bereitstellen der Federanordnung aus einem Elastomer mit zumindest zwei Federarmen, Anordnen der Hülse derart in dem Rahmen, daß die Hülse zur parallel zur ersten Hauptrichtung verlaufenden Mittellinie des Rahmens in der zweiten Hauptrichtung versetzt wird, und Anvulkanisieren der Federanordnung derart an den Rahmen und die Hülse, daß sich beim Nachschwund des Elastomers der Federanordnung nach dem Anvulkanisieren in den Federarmen eine Druckspannung aufbaut.

Dabei ist bevorzugt, daß der Rahmen aus einem einzigen Strangpreßteil, insbesondere in Form eines Aluminiumstrangpreßteils, hergestellt, vorzugsweise gespritzt, wird.

Ferner wird erfindungsgemäß vorgeschlagen, daß der Rahmen mit einem, vorzugsweise plattenförmigen, Befestigungsglied und einem, vorzugsweise U-förmigen, Bügel, derart hergestellt wird, daß ein in der Arbeitsebene geschlossener Käfig, vorzugsweise mit zwei Fortsätzen im Bereich des Befestigungsgliedes, entsteht, wobei insbesondere in jeden Fortsatz zumindest eine Befestigungsöffnung eingebracht wird.

Erfindungsgemäß kann auch vorgesehen sein, daß die Hülse aus einem einzigen Teil, wie in Form eines Aluminiumstrangpreßteils oder Hartgummiteils, hergestellt, vorzugsweise gespritzt, wird.

Weiterhin kann vorgesehen sein, daß die Hülse im Wesentlichen ringförmig, vorzugsweise mit zumindest einer Durchbrechung, insbesondere vier Durchbrechungen, ausgeformt wird.

Bevorzugte Ausführungsformen des erfindungsgemäßen Verfahrens sind dadurch gekennzeichnet, daß vier Federarme bereitgestellt werden, von denen sich vorzugsweise zwei erste Federarme von dem Befestigungsglied zu der Hülse und zwei zweite Federarme von dem Bügel zu der Hülse erstrecken, insbesondere jeweils parallelogrammartig.

Dabei kann vorgesehen sein, daß zwischen den zwei ersten Federarmen ein erstes Verbindungselement und/oder zwischen den zwei zweiten Federarmen ein zweites Verbindungselement als Teil der Federanordnung ausgeformt wird, wobei vorzugsweise das erste Verbindungselement mit dem Befestigungsglied und/oder das zweite Verbindungselement mit dem Bügel beim Anvulkanisieren der Federanordnung an den Rahmen verbunden wird.

Bevorzugt ist dabei, daß das erste Verbindungselement und/oder das zweite Verbindungselement mit zumindest einer Aussparung ausgeformt wird, die vorzugsweise einen Gelenkpunkt umfaßt.

Dabei wird erfindungsgemäß vorgeschlagen, daß sich jede Aussparung im Wesentlichen parallel zur ersten Hauptrichtung erstreckt und/oder zur Mittellinie in der zweiten Hauptrichtung versetzt bereitgestellt wird.

Bevorzugte erfindungsgemäße Ausführungsformen sind des Weiteren dadurch gekennzeichnet, daß zumindest ein Federarm, vorzugsweise jeder Federarm, mit zumindest einem Ellebogen und/oder zumindest einer Taillierung ausgeformt wird, vorzugsweise zwischen den Verbindungsstellen mit einerseits dem Rahmen und andererseits der Hülse.

Dabei kann vorgesehen sein, daß jeder Ellebogen durch eine Vergrößerung der Krümmung des entsprechenden Federarms in der Arbeitsebene bereitgestellt wird, wobei von jedem Ellebogen vorzugsweise ein Winkel von bis zu 90° in der Arbeitsebene eingeschlossen wird.

Ferner wird erfindungsgemäß vorgeschlagen, daß die ersten Federarme jeweils mit einem ersten Ellebogen, jedoch mit gegenläufigen Krümmungen, bereitgestellt werden, wobei vorzugsweise die ersten Ellebogen der ersten Federarme in der ersten Hauptrichtung relativ zueinander versetzt hergestellt werden, und/oder die zweiten Federarme jeweils mit einem zweiten Ellebogen, jedoch mit gegenläufigen Krümmungen, bereitgestellt werden, wobei vorzugsweise die zweiten Ellebogen der zweiten Federarme in der ersten Hauptrichtung relativ zueinander versetzt hergestellt werden.

Dabei kann vorgesehen sein, daß ein erster Ellebogen und ein zweiter Ellebogen auf einer sich parallel zur ersten Hauptrichtung erstreckenden Linie liegen, wobei vorzugsweise der andere erste Ellebogen und der andere zweite Ellebogen auf einer anderen sich parallel zur ersten Hauptrichtung erstreckenden Linie liegen.

Auch wird erfindungsgemäß vorgeschlagen, daß jede Taillierung durch eine Materialeinsparung in einer zu der Arbeitsebene senkrechten Richtung, vorzugsweise auf zwei gegenüberliegenden Federarmflächen, bereitgestellt wird.

Dabei kann vorgesehen sein, daß die Materialeinsparung im Bereich des jeweiligen Ellebogens maximal wird und zu den Enden des jeweiligen Federarms, vorzugsweise stetig, abnimmt.

Bevorzugt ist erfindungsgemäß, daß die Federanordnung spiegelsymmetrisch zu einer parallel zur zweiten Hauptrichtung verlaufenden Achse ausgeformt wird.

Mit der Erfindung wird des Weiteren vorgeschlagen, daß bei der Ausformung der Federanordnung eine Innenauskleidung der Hülse bereitgestellt wird, die vorzugsweise zumindest eine Ausnehmung, vorzugsweise vier Ausnehmungen, umfaßt.

Dabei kann vorgesehen sein, daß keine Ausnehmung der Innenauskleidung im Bereich eines Durchbruches der Hülse ausgeformt wird.

Ferner ist erfindungsgemäß vorgeschlagen, daß sich jede Ausnehmung in der Arbeitsebene radial zur Hülse ausbreitend bereitgestellt wird.

Erfindungsgemäße Ausführungsformen können auch dadurch gekennzeichnet sein, daß bei der Ausformung der Federanordnung zumindest ein Anschlagpuffer zwischen dem Rahmen und der Hülse, sich in der ersten Hauptrichtung erstreckend, bereitgestellt wird, wobei sich vorzugsweise zwischen den beiden ersten Federarmen ein erster Anschlagpuffer von der Hülse zum Befestigungsglied und/oder zwischen den beiden zweiten Federarmen ein zweiter Anschlagpuffer von der Hülse zum Bügel erstreckt.

Dabei kann vorgesehen sein, daß jeder Anschlagpuffer in der Arbeitsebene im Wesentlichen pfeilförmig ausgeformt wird, wobei die Pfeilspitzen vorzugsweise relativ zur Mittellinie in der zweiten Hauptrichtung versetzt werden.

Ferner wird vorgeschlagen, daß die Anschlagpuffer auf einer Seite der Mittellinie und die Aussparungen der Verbindungselemente auf der anderen Seite der Mittellinie, jeweils in der zweiten Hauptrichtung versetzt, bereitgestellt werden.

Bevorzugt ist bei dem erfindungsgemäßen Verfahren, daß nach dem Nachschwinden des Elastomers der Federanordnung eine Druckspannung über die komplette Erstreckung der Federanordnung in der ersten Hauptrichtung vorliegt, während eine Zugspannung auf die Bereiche des Anhaftens der Federanordnung einerseits an dem Rahmen und andererseits an der Hülse beschränkt gehalten wird

Der Erfindung liegt somit die überraschende Erkenntnis zugrunde, daß ein Festlager einfach in Form eines einteiligen Käfiglagers durch Anvulkanisieren einer Federanordnung aus einem Elastomer einerseits an einen Rahmen und andererseits an eine Hülse, jeweils vorzugsweise aus einem einzigen, formsteifen Aluminiumstrangpreßteil ausgeformt, derart hergestellt werden kann, daß aufgrund eines Nachschwindens des Elastomers nach dem Vulkanisationsprozeß automatisch eine Spannung in die Federanordnung induziert wird, die selbst gegenüber der Spannung optimiert ist, die bei dem aus der DE 102 11 955 B4 bekannten Festlager durch Zusammendrücken der Federanordnung bei der Montage zwecks Einführen von Gelenkbolzen angelegt wird. Die Optimierung ergibt sich dabei automatisch bei geeigneter Wahl der Geometrie der Federanordnung beim Nachschwinden des Materials der Federanordnung, also dessen Elastomer. Es ist erfindungsgemäß festgestellt worden, daß eine derartige Geometrie, vorzugsweise mit parallelogrammartigen Federarmen für die Federanordnung, wählbar ist, die sicherstellt, daß sich im Wesentlichen unerwünschte Zugspannungen im Käfiglager nur in dem Bereich der Federanordnung einstellen, in dem dieselbe an dem Rahmen bzw. an der Hülse anhaftet, sich also eine Zugspannung insbesondere nicht über die komplette Erstrekkung der Federarme zwischen dem Rahmen und der Hülse ausbreitet. Hingegen ist die erwünschte Druckspannung erfindungsgemäß derart einstellbar, daß sie sich über die komplette Federanordnung in der ersten Hauptrichtung des Festlagers, in der eine dynamische Beanspruchung in der Einbausituation des Käfiglagers zwischen einem abstützenden Bauteil und einem dynamisch beanspruchbaren Funktionsteil auftritt, wie zwischen einem Kraftfahrzeugboden und einer Abgasanlage, ausbreitet. Wird somit an ein erfindungsgemäß hergestelltes Käfiglager in der Einbausituation eine Zugspannung angelegt, so kann dieselbe aufgrund der in der Federanordnung herrschenden Druckspannung zumindest teilweise kompensiert werden. Das erfindungsgemäße Verfahren zeichnet sich also nicht nur durch seine Einfachheit und reduzierte Anzahl von Arbeitsschritten aus, was zu einer erheblichen Kosteneinsparung bei der Herstellung von Festlagern führt, sondern auch durch eine automatisch optimierte Funktionsfähigkeit eines jeden hergestellten Festlagers im Betrieb.

Besonders vorteilhaft ist es gemäß der Erfindung, die Federanordnung mit vier Federarmen auszuformen, wobei zwei erste, im wesentlichen parallelogrammartigen angeordnete Federarme zwischen der Hülse und einem plattenförmigen, ein Befestigungsglied darstellenden Rahmenbereich und zwei zweite im wesentlichen parallelogrammartigen angeordnete Federarme zwischen der Hülse und einem U-förmigen, einen Bügel darstellenden Rahmenbereich ausgeformt werden und benachbart zu dem Rahmen die beiden ersten Federarmen durch ein erstes Verbindungselement und die beiden zweiten Federarme durch ein zweites Verbindungselement miteinander verbunden sind, so daß die Federarme insgesamt auf einer gedachten "8" liegen. Um die Krümmungen dieser Konfiguration zu realisieren, ist jeder Federarm mit einem Ellebogen ausgestattet, der einen Winkelbereich von bis zu 90° in der Arbeitsebene des Festlagers umschließt, wobei die Krümmungen der Ellebogen der ersten Federarme entgegengesetzt sind und Analoges für die zweiten Federarme gilt. Zudem sind die Federarme im Bereich der Ellebogen senkrecht zur Arbeitsebene tailliert, und die Verbindungselemente sind mit Gelenkpunkte definierenden Aussparungen versehen. Kommt es bei diesem bevorzugten Festlager der Erfindung im Betrieb beispielsweise zu einer Beanspruchung der Hülse im Wesentlichen parallel zum abstützenden Bauteil, also in der zweiten Hauptrichtung, so kann eine Wegaufnahme durch Verschiebungen im Bereich der Gelenkpunkte zwischen den Federarmen und dem Rahmen stattfinden, während bei der Aufnahme von dazu senkrechten Belastungen in Form von dynamischen Kräften die Taillierungen eine Frequenzoptimierung ermöglichen.

Weitere Merkmale und Vorteile der Erfindung ergeben sich aus der nachfolgenden Beschreibung, in der ein Ausführungsbeispiel der Erfindung anhand von schematischen Zeichnungen beispielhaft erläutert wird. Dabei zeigt:
- Figur 1: eine perspektivische Darstellung eines erfindungsgemäßen Festlagers; und
- Figur 2: eine andere perspektivische Darstellung des Festlagers von Figur 1.

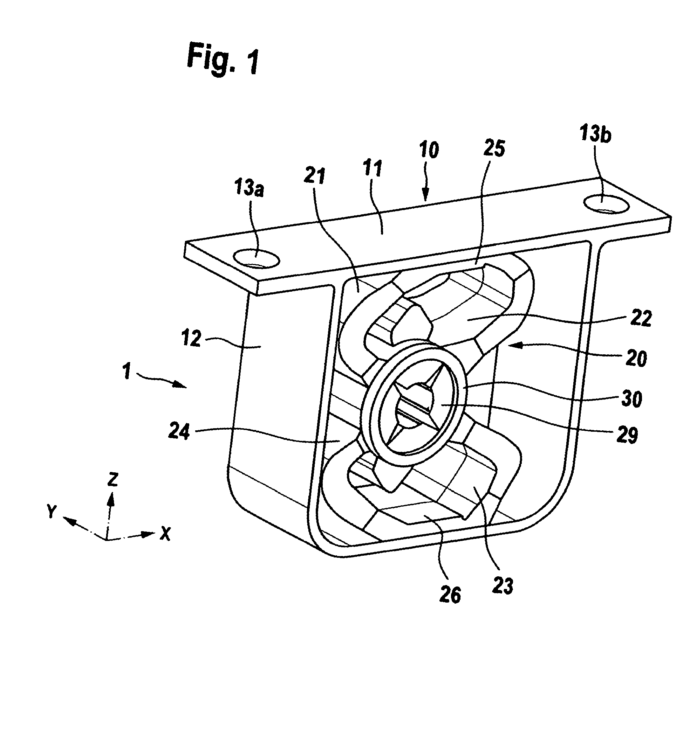

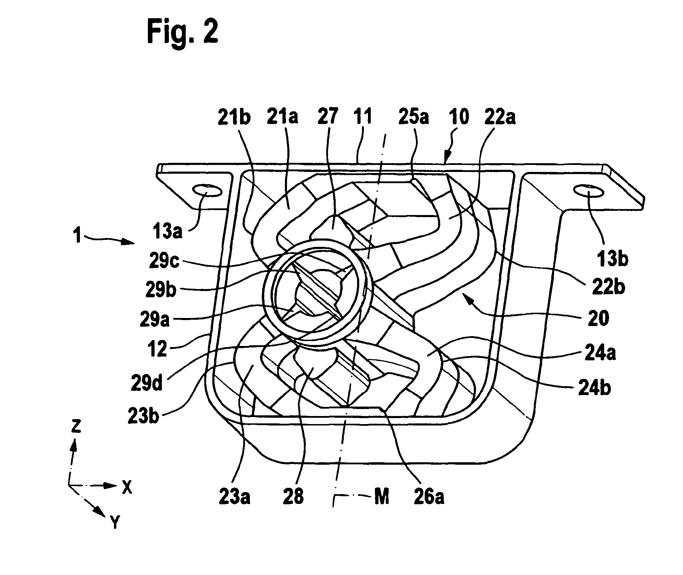

Wie den Figuren 1 und 2 zu entnehmen ist, umfaßt ein erfindungsgemäßes Festlager, bei dem es sich um ein einteiliges Käfiglager 1 handelt, einen Rahmen 10, eine Federanordnung 20 und eine Hülse 30.

Der Rahmen 10 seinerseits ist aus einem Aluminiumstrangpreßteil derart ausgebildet, daß er einen plattenförmigen Bereich aufweist, der als Befestigungsglied 11 fungiert, und einen U-förmigen Bereich aufweist, der im Anschluß als Bügel 12 bezeichnet wird. Der Bügel 12 ist derart mit dem Befestigungsglied 11 verbunden, daß zwei freie Enden des Befestigungsgliedes 11 entstehen, in die jeweils eine Befestigungsöffnung 13a, 13b eingebracht ist.

Die Federanordnung 20 ist aus einem Elastomer hergestellt und in einem Arbeitsschritt an den Rahmen 10 und die Hülse 30 anvulkanisiert. Sie umfaßt vier Federarme 21 bis 24, zwei Verbindungselemente 25, 26, zwei Anschlagpuffer 27, 28 sowie eine Innenauskleidung 29 der Hülse 30.

Die Federarme 21 bis 24 weisen eine derartige Geometrie auf, daß insgesamt der Eindruck entsteht, sie würden auf einer gedachten "8" liegen. Genauer gesagt sind zwei erste Federarme 21, 22 zwischen dem Befestigungsglied 11 und der Hülse 30 und zwei zweite Federarme 23, 24 zwischen der Hülse 30 und dem Bügel 12 bereitgestellt, wobei eine Spiegelsymmetrie längs einer parallel zur X-Achse in den Figuren 1 und 2 verlaufenden Linie vorliegt, jedoch nicht längs der Z-Achse der Figuren. Diese Asymmetrie relativ zur Z-Achse zeigt sich besonders augenfällig in der Versetzung der Hülse 30 relativ zur Mittellinie M des Käfiglagers 1 in der Arbeitsebene desselben in der X-Richtung.

Zudem weisen alle Federarme 21 bis 24 jeweils eine Taillierung 21a bis 24a sowie einen Ellebogen 2 1 b bis 24b auf. Die Ellebogen 21b und 22b der ersten Federarme 21, 22 sind ebenso wie die Ellebogen 23b und 24b der zweiten Federarme 23 und 24 voneinander wegweisend, wobei jedoch sämtliche Ellebogen 21b bis 24b einen Winkel von ca. 90° einschließen. Im Bereich der Ellebogen 21b bis 24b sind die Taillierungen 21a bis 24b, die durch Materialeinsparungen in Richtung der Y-Achse in den Figuren 1 und 2 entstehen, maximal. Die oben erläuterte Symmetrie der Federanordnung 20 spiegelt sich auch in der Gestaltung der Ellebogen 21 b bis 24b wieder, wobei die ersten Ellebogen 2 1 b und 22b nicht auf einer Linie parallel zur X-Achse in den Figuren liegen und Analoges für die zweiten Ellebogen 23b und 24b gilt, während der erste Ellebogen 21 b und der zweite Ellebogen 23b auf einer Linie parallel zur Z-Achse in den Figuren liegt und Analoges für die Ellebogen 22b und 24b gilt.

Zwischen den Federarmen 21 bis 24 sind im Bereich des Rahmens 10 die Verbindungselemente 25, 26 und im Bereich der Hülse 30 die Anschlagpuffer 27, 28 angeordnet. Die Verbindungselemente 25, 26 weisen dabei jeweils eine Aussparung 25a, 26a auf, die sich in Richtung der Z-Achse in den Figuren öffnen, wobei die beiden Aussparungen 25a, 26a auf einer Linie parallel zur Z-Achse in den Figuren, jedoch relativ zur Mittellinie M in Richtung der X-Achse in den Figuren versetzt, angeordnet sind. Ebenso versetzt zur Mittellinie M in Richtung der X-Achse, jedoch auf der gegenüberliegenden Seite der Mittellinie M, sind die Anschlagpuffer 27, 28 angeordnet, die jeweils im Wesentlichen eine Pfeilform aufweisen, deren Pfeilspitze in Richtung des Rahmens 10 zeigen.

Die Innenauskleidung 29 der Hülse 30 ist im Wesentlichen ringförmig und weist vier sich radial von der Hülse 30 zur Längsachse derselben erstreckende Ausnehmungen 29a bis 29d auf.

Ein erfindungsgemäßes Käfiglager kann beispielsweise mit folgenden Dimensionen hergestellt werden:
Die Länge des Befestigungsgliedes 11 beträgt ungefähr 120,5mm in X-Richtung.
Die Länge des Bügels 12 beträgt ungefähr 78mm in X-Richtung.
Die Höhe des kompletten Käfiglagers 1 in Z-Richtung beträgt ungefähr 68,5mm.
Das Zentrum der Hülse 30 ist zum benachbarten äußeren Rand des Befestigungsgliedes 11 in Z-Richtung um ungefähr 34mm beabstandet.
Die Befestigungsöffnungen 13a und 13b sind in X-Richtung ein ungefähr 102mm voneinander beabstandet.
Der Abstand zwischen dem Zentrum einer Befestigungsöffnung 13a und dem Zentrum der Hülse 30 in X-Richtung beträgt ungefähr 40mm.
Die Tiefe der Federarme 21 bis 24 in Y-Richtung beträgt ungefähr 26mm.

Das erfindungsgemäße einteilige Käfiglager 1 kommt vorzugsweise in Kraftfahrzeugen zum Einsatz, nämlich zur Befestigung einer nicht gezeigten Abgasanlage an einem nicht gezeigten Kraftfahrzeugboden. Zu diesem Zwecke wird das Befestigungsglied 11 an den Kraftfahrzeugboden mittels durch die Befestigungsöffnungen 13a, 13b verlaufende Befestigungsglieder befestigt und die Abgasanlage an die Hülse 30 angebracht, indem ein Teil der Abgasanlage durch die von der Innenauskleidung 29 freigelassene Öffnung hindurchgeführt wird. Durch die Ausnehmungen 29a bis 29d der Innenauskleidung 29 wird diese Montage erleichtert.

Kommt es nun zu einer dynamischen Beanspruchung der Abgasanlage relativ zum Fahrzeugboden im Betrieb des Kraftfahrzeuges in Z-Richtung in den Figuren, so kommt es zu einer Aufnahme von dynamischen Kräften durch das Käfiglager 1 über die Federarme 21 bis 24, wobei deren Geometrie, insbesondere bestimmt durch die Taillierungen 21a bis 24a sowie Ellebogen 21b bis 24b, eine Frequenzoptimierung zuläßt. Bei einer Verschiebung der statischen Nulllage der Hülse 30 im Betrieb des Käfiglagers 1 in Richtung der X-Achse in den Figuren kommt es zu einer Wegaufnahme durch Verschiebungen im Bereich der durch die Aussparungen 25a, 26a der Verbindungselemente 25, 26 bereitgestellten Gelenkpunkte.

Dabei ist zu beobachten, daß sich bei einem Nachschwinden des Elastomermaterials der Federanordnung 20, nach dem Anvulkanisieren der Federanordnung 20 an den Rahmen 10 und die Hülse 30, automatisch Spannungen in den Federarmen 21 bis 24 aufbauen, die, in Abhängigkeit von der Geometrie der Federarme 21 bis 24, die Aufnahme dynamischer Kräfte in Z-Richtung zufriedenstellend ermöglichen, während eine Verschiebung in X-Richtung durch die Aussparungen 25a, 26a in den Verbindungselementen 25, 26 erleichtert wird, so daß insgesamt auf die aus dem Stand der Technik bekannte, komplizierte Ausgestaltung eines Festlagers aus zwei Teilen, die gelenkig miteinander zu verbinden sind und bei denen der Rahmen ein starres Teil und ein elastisches Teil aufweist, verzichtet werden kann. Es ist aufgrund der erfindungsgemäßen Herstellung des Käfiglagers 1 selbst möglich, bereits eine optimale Spannungsverteilung im Käfiglager 1, nämlich der Federanordnung 20, vorzusehen. Aufgrund der zuvor beschriebenen Geometrie der Federanordnung 20 führt ein Nachschwinden des Elastomermaterials derselben beim Befestigen an den Rahmen 10 und die Hülse 30 automatisch dazu, daß sich eine Zugspannung nur im Bereich der Verbindung zwischen der Federanordnung 20 einerseits mit dem Rand 10 und andererseits mit der Hülse 30, also im wesentlichen im Bereich der Verbindungselemente 25, 26, den freien Enden der Federarme 21 bis 24 sowie der breiten Fläche der pfeilförmigen Anschlagpuffer 27, 28, aufbaut, während sich eine erwünschte Druckspannung über die komplette Federanordnung 20 in der ersten Hauptrichtung längs der Z-Richtung der Figuren erstreckt, also über die komplette Länge der Federarme 21-24 sowie der Anschlagpuffer 27, 28.

Die in der voranstehenden Beschreibung, in den Zeichnungen sowie in den Ansprüchen offenbarten Merkmale können sowohl einzeln als auch in jeder beliebigen Kombination für die Verwirklichung der Erfindung in ihren verschiedenen Ausführungsformen wesentlich sein.

## Patentansprüche

1. Verfahren zur Herstellung eines Festlagers (1) zur Aufhängung zumindest eines dynamisch beanspruchbaren Funktionsteiles an einem abstützenden Bauteil, wobei das Festlager (1) einen Rahmen (10), eine Federanordnung (20) und eine Hülse (30) umfaßt, die Federanordnung (20) den Rahmen (10) mit der Hülse (30) verbindet, der Rahmen (10) die Hülse (30) und die Federanordnung (20) in einer Arbeitsebene (X-Z) des Festlagers (1) umschließt, die Arbeitsebene (X-Z) eine erste Hauptrichtung (Z), in der das Funktionsteil im Betrieb des Festlagers (1) dynamisch beansprucht wird, und eine zu der ersten Hauptrichtung (Z) senkrechte zweite Hauptrichtung (X), in der eine statische Nulllage des Funktionsteils im Betrieb des Festlagers (1) variabel ist, umfaßt, der Rahmen (10) am Bauteil befestigt wird, und das Funktionsteil an die Hülse (30) angebracht wird,
**gekennzeichnet durch** folgende Schritte:
Bereitstellen des Rahmens (10) und der Hülse (30) jeweils aus einem formsteifen Teil,
Bereitstellen der Federanordnung (20) aus einem Elastomer mit zumindest zwei Federarmen (21-24),
Anordnen der Hülse (30) derart in dem Rahmen (10), daß die Hülse (30) zur parallel zur ersten Hauptrichtung (Z) verlaufenden Mittellinie (M) des Rahmens (10) in der zweiten Hauptrichtung (X) versetzt wird, und
Anvulkanisieren der Federanordnung (20) derart an den Rahmen (10) und die Hülse (30), daß sich beim Nachschwund des Elastomers der Federanordnung (20) nach dem Anvulkanisieren in den Federarmen (21-24) eine Druckspannung aufbaut.

2. Verfahren nach Anspruch 1, **dadurch gekennzeichnet, daß**
der Rahmen (10) aus einem einzigen Strangpreßprofil, insbesondere in Form eines Aluminiumstrangpreßteils, hergestellt, vorzugsweise gespritzt, wird.

3. Verfahren nach Anspruch 1 oder 2, **dadurch gekennzeichnet, daß**
der Rahmen (10) mit einem, vorzugsweise plattenförmigen, Befestigungsglied (11) und einem, vorzugsweise U-förmigen, Bügel (12), derart hergestellt wird, daß ein in der Arbeitsebene (X-Z) geschlossener Käfig, vorzugsweise mit zwei Fortsätzen im Bereich des Befestigungsgliedes (11), entsteht, wobei insbesondere in jeden Fortsatz zumindest eine Befestigungsöffnung (13a, 13b) eingebracht wird.

4. Verfahren nach einem der vorangehenden Ansprüche, **dadurch gekennzeichnet, daß**
die Hülse (30) aus einem einzigen Teil, wie in Form eines Aluminiumstrangpreßteils oder Hartgummiteils, hergestellt, vorzugsweise gespritzt, wird.

5. Verfahren nach einem der vorangehenden Ansprüche, **dadurch gekennzeichnet, daß**
die Hülse (30) im Wesentlichen ringförmig, vorzugsweise mit zumindest einer Durchbrechung, insbesondere vier Durchbrechungen, ausgeformt wird.

6. Verfahren nach einem der vorangehenden Ansprüche, **dadurch gekennzeichnet, daß**
vier Federarme (21-24) bereitgestellt werden, von denen sich vorzugsweise zwei erste Federarme (21, 22) von dem Befestigungsglied (11) zu der Hülse (30) und zwei zweite Federarme (23, 24) von dem Bügel (12) zu der Hülse (30) erstrecken, insbesondere jeweils parallelogrammartig.

7. Verfahren nach Anspruch 6, **dadurch gekennzeichnet, daß**
zwischen den zwei ersten Federarmen (21, 22) ein erstes Verbindungselement (25) und/oder zwischen den zwei zweiten Federarmen (23, 24) ein zweites Verbindungselement (26) als Teil der Federanordnung (20) ausgeformt wird, wobei vorzugsweise das erste Verbindungselement (25) mit dem Befestigungsglied (11) und/oder das zweite Verbindungselement (26) mit dem Bügel (12) beim Anvulkanisieren der Federanordnung (20) an den Rahmen (10) verbunden wird.

8. Verfahren nach Anspruch 7, **dadurch gekennzeichnet, daß**
das erste Verbindungselement (25) und/oder das zweite Verbindungselement (26) mit zumindest einer Aussparung (25a, 26a) ausgeformt wird, die vorzugsweise einen Gelenkpunkt umfaßt.

9. Verfahren nach Anspruch 8, **dadurch gekennzeichnet, daß**
sich jede Aussparung (25a, 26a) im Wesentlichen parallel zur ersten Hauptrichtung (Z) erstreckt und/oder zur Mittellinie (M) in der zweiten Hauptrichtung (X) versetzt bereitgestellt wird.

10. Verfahren nach einem der vorangehenden Ansprüche, **dadurch gekennzeichnet, daß**
zumindest ein Federarm (21-24), vorzugsweise jeder Federarm, mit zumindest einem Ellebogen (21b-24b) und/oder zumindest einer Taillierung (21 a-24a) ausgeformt wird, vorzugsweise zwischen den Verbindungsstellen mit einerseits dem Rahmen (10) und andererseits der Hülse (30).

11. Verfahren nach Anspruch 10, **dadurch gekennzeichnet, daß**
jeder Ellebogen (21b-24b) durch eine Vergrößerung der Krümmung des entsprechenden Federarms (21-24) in der Arbeitsebene (X-Z) bereitgestellt wird, wobei von jedem Ellebogen (21b-24b) vorzugsweise ein Winkel von bis zu 90° in der Arbeitsebene (X-Z) eingeschlossen wird.

12. Verfahren nach Anspruch 10 oder 11, **dadurch gekennzeichnet, daß**
die ersten Federarme (21, 22) jeweils mit einem ersten Ellebogen (21b, 22b), jedoch mit gegenläufigen Krümmungen, bereitgestellt werden, wobei vorzugsweise die ersten Ellebogen (21b, 22b) der ersten Federarme (21, 22) in der ersten Hauptrichtung (Z) relativ zueinander versetzt hergestellt werden, und/oder die zweiten Federarme (23, 24) jeweils mit einem zweiten Ellebogen (23b, 24b), jedoch mit gegenläufigen Krümmungen, bereitgestellt werden, wobei vorzugsweise die zweiten Ellebogen (23b, 24b) der zweiten Federarme (23, 24) in der ersten Hauptrichtung (Z) relativ zueinander versetzt hergestellt werden.

13. Verfahren nach Anspruch 12, **dadurch gekennzeichnet, daß**
ein erster Ellebogen (21b) und ein zweiter Ellebogen (23b) auf einer sich parallel zur ersten Hauptrichtung (Z) erstreckenden Linie liegen, wobei vorzugsweise der andere erste Ellebogen (22b) und der andere zweite Ellebogen (24b) auf einer anderen sich parallel zur ersten Hauptrichtung (Z) erstreckenden Linie liegen.

14. Verfahren nach einem der vorangehenden Ansprüche 10 bis 13, **dadurch gekennzeichnet, daß**
jede Taillierung (21a-24a) durch eine Materialeinsparung in einer zu der Arbeitsebene (X-Z) senkrechten Richtung (Y), vorzugsweise auf zwei gegenüberliegenden Federarmflächen, bereitgestellt wird.

15. Verfahren nach Anspruch 14, **dadurch gekennzeichnet, daß**
die Materialeinsparung im Bereich des jeweiligen Ellebogens (21b-24b) maximal wird und zu den Enden des jeweiligen Federarms (21-24), vorzugsweise stetig, abnimmt.

16. Verfahren nach einem der vorangehenden Ansprüche, **dadurch gekennzeichnet, daß**
die Federanordnung (20) spiegelsymmetrisch zu einer parallel zur zweiten Hauptrichtung (X) verlaufenden Achse ausgeformt wird.

17. Verfahren nach einem der vorangehenden Ansprüche, **dadurch gekennzeichnet, daß**
bei der Ausformung der Federanordnung (20) eine Innenauskleidung (29) der Hülse (30) bereitgestellt wird, die vorzugsweise zumindest eine Ausnehmung (29a-29d), vorzugsweise vier Ausnehmungen, umfaßt.

18. Verfahren nach Anspruch 17, **dadurch gekennzeichnet, daß**
keine Ausnehmung (29a-29d) der Innenauskleidung (29) im Bereich eines Durchbruches der Hülse (30) ausgeformt wird.

19. Verfahren nach Anspruch 17 oder 18, **dadurch gekennzeichnet, daß**
sich jede Ausnehmung (29a-29d) in der Arbeitsebene (X-Z) radial zur Hülse (30) ausbreitend bereitgestellt wird.

20. Verfahren nach einem der vorangehenden Ansprüche, **dadurch gekennzeichnet, daß**
bei der Ausformung der Federanordnung (20) zumindest ein Anschlagpuffer (27, 28) zwischen dem Rahmen (10) und der Hülse, sich in der ersten Hauptrichtung (Z) erstreckend, bereitgestellt wird, wobei sich vorzugsweise zwischen den beiden ersten Federarmen (21, 22) ein erster Anschlagpuffer (27) von der Hülse (30) zum Befestigungsglied (11) und/oder zwischen den beiden zweiten Federarmen (23, 24) ein zweiter Anschlagpuffer (28) von der Hülse (30) zum Bügel (12) erstreckt.

21. Verfahren nach Anspruch 20, **dadurch gekennzeichnet, daß**
jeder Anschlagpuffer (27, 28) in der Arbeitsebene (X-Z) im Wesentlichen pfeilförmig ausgeformt wird, wobei die Pfeilspitzen vorzugsweise relativ zur Mittellinie (M) in der zweiten Hauptrichtung (X) versetzt werden.

22. Verfahren nach Anspruch 21, **dadurch gekennzeichnet, daß**
die Anschlagpuffer (27, 28) auf einer Seite der Mittellinie (11) und die Aussparungen (25a, 26a) der Verbindungselemente (25, 26) auf der anderen Seite der Mittellinie (M), jeweils in der zweiten Hauptrichtung (X) versetzt, bereitgestellt werden.

23. Verfahren nach einem der vorangehenden Ansprüche, **dadurch gekennzeichnet, daß**
nach dem Nachschwinden des Elastomers der Federanordnung (20) eine Druckspannung über die komplette Erstreckung der Federanordnung (20) in der ersten Hauptrichtung (Z) vorliegt, während eine Zugspannung auf die Bereiche des Anhaftens der Federanordnung (20) einerseits an dem Rahmen (10) und andererseits an der Hülse (30) beschränkt gehalten wird.

## Claims

1. Process for the manufacture of a fixed bearing (1) for suspension of at least one dynamically stressable functional part on a supporting component, the fixed bearing (1) comprising a frame (10), a spring arrangement (20) and a sleeve (30), the spring arrangement (20) connecting the frame (10) to the sleeve (30), the frame (10) surrounding the sleeve (30) and the spring arrangement (20) in a working plane (X-Z) of the fixed bearing (1), the working plane (X-Z) comprising a first main direction (Z), in which the functional part is dynamically stressed during operation of the fixed bearing (1), and a second main direction (X), which is perpendicular to the first main direction (Z) and in which a static neutral position of the functional part during operation of the fixed bearing (1) is variable, the frame (10) being fastened to the component, and the functional part being attached to the sleeve (30),
**characterized by** the following steps:
providing the frame (10) and the sleeve (30) in each case from a dimensionally rigid part,
providing the spring arrangement (20) from an elastomer and with at least two spring arms (21-24),
arranging the sleeve (30) in the frame (10) in such a manner that the sleeve (30) is offset in the second main direction (X) with respect to the centre line (M) of the frame (10), which centre line runs parallel to the first main direction (Z), and
vulcanizing the spring arrangement (20) onto the frame (10) and the sleeve (30) in such a manner that, during the after-shrinkage of the elastomer of the spring arrangement (20) after it has been vulcanized on, a compressive stress builds up in the spring arms (21-24).

2. Process according to Claim 1, **characterized in that** the frame (10) is produced, preferably injection-moulded, from a single extruded profile, in particular in the form of an aluminium extruded part.

3. Process according to Claim 1 or 2, **characterized in that** the frame (10) is produced with a preferably plate-like fastening element (11) and a preferably U-shaped hoop (12) in such a manner that a cage which is closed in the working plane (X-Z), preferably with two extensions in the region of the fastening element (11), is produced, with, in particular, at least one fastening opening (13a, 13b) being provided in each extension.

4. Process according to one of the preceding claims, **characterized in that** the sleeve (30) is produced, preferably injection-moulded, from a single part, such as in the form of an aluminium extruded part or a hard rubber part.

5. Process according to one of the preceding claims, **characterized in that** the sleeve (30) is shaped essentially annularly, preferably with at least one aperture, in particular four apertures.

6. Process according to one of the preceding claims, **characterized in that** four spring arms (21-24) are provided, of which preferably two first spring arms (21, 22) extend from the fastening element (11) to the sleeve (30) and two second spring arms (23, 24) extend from the hoop (12) to the sleeve (30), in particular in each case in the manner of a parallelogram.

7. Process according to Claim 6, **characterized in that**, as part of the spring arrangement (20), a first connecting element (25) is formed between the two first spring arms (21, 22) and/or a second connecting element (26) is formed between the two second spring arms (23, 24), with, preferably, the first connecting element (25) being connected to the fastening element (11) and/or the second connecting element (26) being connected to the hoop (12) when the spring arrangement (20) is vulcanized onto the frame (10).

8. Process according to Claim 7, **characterized in that** the first connecting element (25) and/or the second connecting element (26) is/are formed with at least one cutout (25a, 26a) which preferably comprises a point of articulation.

9. Process according to Claim 8, **characterized in that** each cutout (25a, 26a) extends essentially parallel to the first main direction (Z) and/or is provided offset with respect to the centre line (M) in the second main direction (X).

10. Process according to one of the preceding claims, **characterized in that** at least one spring arm (21-24), preferably each spring arm, is formed with at least one elbow (21b-24b) and/or at least one waist (21a-24a), preferably between the connecting points to, firstly, the frame (10) and, secondly, the sleeve (30).

11. Process according to Claim 10, **characterized in that** each elbow (21b-24b) is provided by enlargement of the curvature of the corresponding spring arm (21-24) in the working plane (X-Z), with, preferably, an angle of up to 90° in the working plane (X-Z) being enclosed by each elbow (21b-24b).

12. Process according to Claim 10 or 11, **characterized in that** the first spring arms (21, 22) are each provided with a first elbow (21b, 22b), but with opposed curvatures, with, preferably, the first elbows (21b, 22b) of the first spring arms (21, 22) being produced such that they are offset relative to each other in the first main direction (Z), and/or the second spring arms (23, 24) each being provided with a thickened elbow (23b, 24b), but with opposed curvatures, and with, preferably, the second elbows (23b, 24b) of the second spring arms (23, 24) being produced such that they are offset relative to each other in the first main direction (z).

13. Process according to Claim 12, **characterized in that** a first elbow (21b) and a second elbow (23b) lie on a line extending parallel to the first main direction (Z), with, preferably, the other first elbow (22b) and the other second elbow (24b) lying on a different line extending parallel to the first main direction (Z).

14. Process according to one of the preceding Claims 10 to 13, **characterized in that** each waist (21a-24a) is provided by a material saving in a direction (Y) perpendicular to the working plane (X-Z), preferably on two opposite spring arm surfaces.

15. Process according to Claim 14, **characterized in that** the material saving is at maximum in the region of the respective elbow (21b-24b) and decreases, preferably continuously, to the ends of the respective spring arm (21-24).

16. Process according to one of the preceding claims, **characterized in that** the spring arrangement (20) is formed mirror-symmetrically to an axis running parallel to the second main direction (X).

17. Process according to one of the preceding claims, **characterized in that** an inner lining (29) of the sleeve (30), which inner lining preferably comprises at least one recess (29a-29d), preferably four recesses, is provided during the formation of the spring arrangement (20).

18. Process according to Claim 17, **characterized in that** no recess (29a-29d) of the inner lining (29) is formed in the region of an opening in the sleeve (30).

19. Process according to Claim 17 or 18, **characterized in that** each recess (29a-29d) in the working plane (X-Z) is provided in a manner such that it spreads out radially with respect to the sleeve (30).

20. Process according to one of the preceding claims, **characterized in that** at least one stop buffer (27, 28) is provided, extending in the first main direction (Z), between the frame (10) and the sleeve during the formation of the spring arrangement (20), with, preferably, between the two first spring arms (21, 22), a first stop buffer (27) extending from the sleeve (30) to the fastening element (11), and/or, between the two second spring arms (23, 24), a second stop buffer (28) extending from the sleeve (30) to the hoop (12).

21. Process according to Claim 20, **characterized in that** each stop buffer (27, 28) in the working plane (X-Z) is formed essentially in the shape of an arrow, with the arrow tips preferably being offset relative to the centre line (M) in the second main direction (X).

22. Process according to Claim 21, **characterized in that** the stop buffers (27, 28) are provided on one side of the centre line (11) and the cutouts (25a, 26a) of the connecting elements (25, 26) are provided on the other side of the centre line (M), in each case offset in the second main direction (X).

23. Process according to one of the preceding claims, **characterized in that**, after the after-shrinkage of the elastomer of the spring arrangement (20), there is a compressive stress over the entire extent of the spring arrangement (20) in the first main direction (Z) while a tensile stress is restricted to the regions of adhesion of the spring arrangement (20) firstly to the frame (10) and secondly to the sleeve (30).

## Revendications

1. Procédé pour la fabrication d'un palier fixe (1) pour la suspension d'au moins un élément fonctionnel pouvant être sollicité dynamiquement sur un composant d'appui, le palier fixe (1) comprenant un cadre (10), un agencement de ressort (20) et un manchon (30), l'agencement de ressort (20) reliant le cadre (10) au manchon (30), le cadre (10) encerclant le manchon (30) et l'agencement de ressort (20) dans un plan de travail (X - Z) du palier fixe (1), le plan de travail (X - Z) comprenant une première direction principale (Z), dans laquelle l'élément fonctionnel est dynamiquement sollicité en fonctionnement du palier fixe (1), et une seconde direction principale (X), perpendiculaire à la première direction principale (Z), dans laquelle une position zéro statique de l'élément fonctionnel est variable en fonctionnement du palier fixe (1), le cadre (10) étant fixé sur le composant, et l'élément fonctionnel étant monté sur le manchon (30),
**caractérisé par** les étapes suivantes :
préparation du cadre (10) et du manchon (30) respectivement à partir d'une pièce indéformable,
préparation de l'agencement de ressort (20) à partir d'un élastomère avec au moins deux bras de ressort (21 - 24),
agencement du manchon (30) dans le cadre (10) de telle sorte que le manchon (30) soit décalé dans la seconde direction principale (X) par rapport à la ligne médiane (M) du cadre (10) s'étendant parallèlement à la première direction principale (Z), et
vulcanisation de l'agencement à ressort (20) sur le cadre (10) et le manchon (30) de telle sorte qu'il s'établisse lors de la post-contraction de l'élastomère de l'agencement de ressort (20) une contrainte de compression dans les bras de ressort (21 -24) après la vulcanisation.

2. Procédé suivant la revendication 1, **caractérisé en ce que** le cadre (10) est fabriqué, de préférence injecté, à partir d'un profilé extrudé unique, en particulier sous la forme d'une pièce extrudée en aluminium.

3. Procédé suivant l'une des revendications 1 et 2, **caractérisé en ce que** le cadre (10) est fabriqué avec un organe de fixation (11), de préférence en forme de plaque, et un étrier (12), de préférence en forme de U, de telle sorte qu'il en résulte une cage fermée dans le plan de travail (X - Z), de préférence avec deux prolongements dans la zone de l'organe de fixation (11), au moins une ouverture de fixation (13a, 13b) étant en particulier pratiquée dans chaque prolongement.

4. Procédé suivant l'une des revendications précédentes, **caractérisé en ce que** le manchon (30) est fabriqué, de préférence injecté, à partir d'une pièce unique, telle que sous la forme d'une pièce extrudée en aluminium ou d'une pièce en caoutchouc dur.

5. Procédé suivant l'une des revendications précédentes, **caractérisé en ce que** le manchon (30) est conformé essentiellement en anneau, de préférence avec au moins un jour, en particulier quatre jours.

6. Procédé suivant l'une des revendications précédentes, **caractérisé par** la préparation de quatre bras de ressort (21 - 24), dont deux premiers bras de ressort (21, 22) s'étendent de préférence de l'organe de fixation (11) en direction du manchon (30), et deux seconds bras de ressort (23, 24) s'étendent de l'étrier (12) en direction du manchon (30), en particulier respectivement à la manière d'un parallélogramme.

7. Procédé suivant la revendication 6, **caractérisé en ce qu'**un premier élément de liaison (25) est conformé entre les deux premiers bras de ressort (21, 22), et/ou un second élément d'assemblage (26) est conformé entre les deux seconds bras de ressort (23, 24), sous forme d'une partie de l'agencement de ressort (20), le premier élément de liaison (25) étant de préférence relié à l'organe de fixation (11), et/ou le second élément de liaison (26) étant relié à l'étrier (12), lors de la vulcanisation de l'agencement de ressort (20) sur le cadre (10).

8. Procédé suivant la revendication 7, **caractérisé en ce que** le premier élément de liaison (25) et/ou le second élément de liaison (26) sont conformés avec au moins un évidement (25a, 26a), qui comprend de préférence un point d'articulation.

9. Procédé suivant la revendication 8, **caractérisé en ce que** chaque évidement (25a, 26a) s'étend de façon essentiellement parallèle à la première direction principale (Z) et/ou est préparé de manière décalée par rapport à la ligne médiane (M) dans la seconde direction principale (X).

10. Procédé suivant l'une des revendications précédentes, **caractérisé en ce qu'**au moins un bras de ressort (21 - 24), de préférence chaque bras de ressort, est conformé avec au moins un coude (21b - 24b) et/ou au moins une taille (21a - 24a), de préférence entre les points de liaison avec le cadre (10) d'une part, et le manchon (30) d'autre part.

11. Procédé suivant la revendication 10, **caractérisé en ce que** chaque coude (21b - 24b) est préparé par un agrandissement de la courbure du bras de ressort (21 - 24) correspondant dans le plan de travail (X - Z), un angle de jusqu'à 90° étant de préférence formé par chaque coude (21b - 24b) dans le plan de travail (X - Z).

12. Procédé suivant l'une des revendications 10 et 11, **caractérisé en ce que** les premiers bras de ressort (21, 22) sont respectivement préparés avec un premier coude (21b, 22b), mais avec des courbures contraires, les premiers coudes (21b, 22b) des premiers bras de ressort (21, 22) étant de préférence fabriqués de manière mutuellement décalée dans la première direction principale (Z), et/ou les seconds bras de ressort (23, 24) étant préparés avec un second coude (23b, 24b), mais avec des courbures contraires, les seconds coudes (23b, 24b) des seconds bras de ressort (23, 24) étant de préférence fabriqués de manière mutuellement décalée dans la première direction principale (Z).

13. Procédé suivant la revendication 12, **caractérisé en ce qu'**un premier coude (21b) et un second coude (23b) se situent sur une ligne s'étendant parallèlement à la première direction principale (Z), l'autre premier coude (22b) et l'autre second coude (24b) se situant de préférence sur une autre ligne s'étendant parallèlement à la première direction principale (Z).

14. Procédé suivant l'une des revendications précédentes 10 à 13, **caractérisé en ce que** chaque taille (21a - 24a) est préparée par une économie de matière dans une direction (Y) perpendiculaire au plan de travail (X - Z), de préférence sur deux surfaces opposées de bras de ressort.

15. Procédé suivant la revendication 14, **caractérisé en ce que** l'économie de matériau est maximale dans la zone du coude respectif (21b - 24b) et diminue, de préférence en continu, jusqu'aux extrémités du bras de ressort respectif (21 - 24).

16. Procédé suivant l'une des revendications précédentes, **caractérisé en ce que** l'agencement de ressort (20) est conformé symétriquement par rapport à un axe s'étendant parallèlement à la seconde direction principale (X).

17. Procédé suivant l'une des revendications précédentes, **caractérisé en ce qu'**un garnissage intérieur (29) du manchon (30) est préparé lors de la mise en forme de l'agencement de ressort (30), lequel garnissage comprend de préférence au moins un creux (29a - 29d), de préférence quatre creux.

18. Procédé suivant la revendication 17, **caractérisé en ce qu'**aucun creux (29a - 29d) du garnissage intérieur (29) n'est conformé dans la zone d'un jour du manchon (30).

19. Procédé suivant l'une des revendications 17 et 18, **caractérisé en ce que** chaque creux (29a - 29d) est préparé dans le plan de travail (X - Z) en s'élargissant dans la direction radiale par rapport au manchon (30).

20. Procédé suivant l'une des revendications précédentes, **caractérisé en ce que**, lors de la mise en forme de l'agencement de ressort (20), au moins un tampon de butée (27, 28) s'étendant dans la première direction principale (Z) est préparé entre le cadre (10) et le manchon, un premier tampon de butée (27) s'étendant de préférence du manchon (30) en direction de l'organe de fixation (11) entre les deux premiers bras de ressort (21, 22), et/ou un second tampon de butée (28) s'étendant du manchon (30) en direction de l'étrier (12) entre les deux seconds bras de ressort (23, 24).

21. Procédé suivant la revendication 20, **caractérisé en ce que** chaque tampon de butée (27, 28) est conformé dans le plan de travail (X - Z) essentiellement en flèche, les pointes des flèches étant de préférence décalées par rapport à la ligne médiane (M) dans la seconde direction principale (X).

22. Procédé suivant la revendication 21, **caractérisé en ce que** les tampons de butée (27, 28) sont préparés sur un côté de la ligne médiane (M) et les évidements (25a, 26a) des éléments de liaison (25, 26) sur l'autre côté de la ligne médiane (M), respectivement décalés dans la seconde direction principale (X).

23. Procédé suivant l'une des revendications précédentes, **caractérisé en ce que**, après la post-contraction de l'élastomère de l'agencement de ressort (20), une contrainte de compression s'applique sur l'extension complète de l'agencement de ressort (20) dans la première direction principale (Z), tandis qu'une contrainte de traction est maintenue à une valeur limitée sur les zones de l'adhérence de l'agencement de ressort (20) sur le cadre (10) d'une part, et sur le manchon (30) d'autre part.
